(19) Europäisches Patentamt
European Patent Office
Office européen des brevets

(11) Veröffentlichungsnummer: **0 296 449 B1**

# EUROPÄISCHE PATENTSCHRIFT

(12)

(45) Veröffentlichungstag der Patentschrift:
27.03.91 Patentblatt 91/13

(51) Int. Cl.$^5$: **C08J 9/02**, C08G 18/72,
// C08L75/04

(21) Anmeldenummer: 88109417.1

(22) Anmeldetag: 14.06.88

(54) **Verfahren zur Herstellung von kalthärtenden Polyurethan-Weichformschaumstoffen.**

(30) Priorität: 26.06.87 DE 3721058

(43) Veröffentlichungstag der Anmeldung:
28.12.88 Patentblatt 88/52

(45) Bekanntmachung des Hinweises auf die
Patenterteilung:
27.03.91 Patentblatt 91/13

(84) Benannte Vertragsstaaten:
BE DE ES FR GB IT NL SE

(56) Entgegenhaltungen:
DE-A- 1 940 182
DE-A- 2 948 289

(56) Entgegenhaltungen:
JOURNAL OF CELLULAR PLASTICS, Band 20,
Nr. 3, Mai-Juni 1984, Seiten 200-208, Westport,
Connecticut, US: S. CONSOLI et al.: "Is it
really necessary to use an auxiliary blowing
agent in the production of flexible slabstock
polyurethane foams? First approach to foams
expanded with water only"

(73) Patentinhaber: BAYER AG
W-5090 Leverkusen 1 Bayerwerk (DE)

(72) Erfinder: Wolf, Klaus Dieter, Dr.
Andreas-Gryphius Strasse 22
W-5000 Koeln 80 (DE)
Erfinder: Kogelnik, Hans-Joachim, Dr.
Roggendorfstrasse 61
W-5000 Koeln (DE)

## Beschreibung

Kalthärtende Polyurethan-Weichformschaumstoffe finden bekanntlich eine sehr verbreitete Anwendung und werden u.a. auch im Automobilbereich und in der Möbelindustrie genutzt. Die Qualität der beim Einsatz als Sitz- bzw. Lehnenpolster üblichen Polyurethan-Weichformschaumstoffe wird weitestgehend von ihrer Rohdichte bestimmt. Unabhängig von der Art der zur Herstellung von Kaltformschaumstoffen einsetzbaren Basisrohstoffe (Polyole/Isocyanate) hat sich für die verschiedenen Anwendungen und die damit verbundenen Anforderungen, besonders jedoch hinsichtlich möglichst günstiger Dauergebrauchseigenschaften, ein bestimmtes Rohdichteniveau als zweckmäßig und praxisgerecht erwiesen.

Für die zu erzielende Rohdichte ist hauptsächlich der Wassergehalt der Rohstoffkombination bestimmend, wobei je nach angestrebtem Rohdichteniveau Wassermengen bis zu 5 (üblicherweise 2,5-3,5) Gew.-Tle. pro 100 Tle. Polyol als typisch gelten.

Wie sich gezeigt hat, lassen sich die je nach Schaumanwendung oftmals aus Gründen einer Gewichts- und Kostenersparnis angestrebten niedrigeren Rohdichten nur in Ausnahmefällen durch Steigerung des Wassergehaltes über die angegebenen Mengen hinaus realisieren. Der Grund dafür liegt in der Tatsache, daß mit zunehmendem Wasseranteil (> 3,5 Gew.-Tle. pro 100 Gew.-Tle. Polyol) die für den Schäumprozeß unerläßliche katalytische Abstimmung der chemischen Reaktionen (Polymerbildung/Gasbildung) schwieriger und der Verarbeitungsspielraum insgesamt stark eingeengt wird. Neben Problemen bezüglich Hautbeschaffenheit (Formentemperatur/Trennmittel) und Schaumstabilität resultiert insbesondere auch eine Beeinträchtigung (= Beschränkung) des Kennzahl-Spielraumes. Aus diesen Gründen werden gewünschte bzw. erforderliche Erniedrigungen der Rohdichte vorzugsweise durch die Mitverwendung physikalisch wirkender Treibmittel (z.B. Halogenkohlenwasserstoffe) verwirklicht. Diese Verfahrensweise ist Stand der Technik und gilt im Prinzip für alle Kaltformschaumstoffe.

Da bei der Verwendung von reinem MDI und vor allem auch bei MDI-Prepolymeren wegen des vergleichsweise niedrigen NCO-Gehaltes (ca. 32% bzw. ca. 25% und weniger) mit der pro Mengenanteil Wasser entwickelten $CO_2$-Menge eine im Vergleich zur TDI-Anwendung (NCO = 48.3%) größere Rohstoffmasse aufgeschäumt werden muß, ist der Zusatz alternativer Treibmittel bisher oftmals unerläßlich, um je nach Anwendung ein annähernd zufriedenstellendes Rohdichteniveau zu erzielen. Dies ist jedoch aus Gründen der Umweltbelastung und auch aus Kostengründen keine zu befürwortende Methode.

Um bei der Verwendung von reinem TDI, TDI-Abmischungen bzw. entsprechenden Prepolymeren die üblichen Rohdichtebereiche der PUR-Schäume weiter zu erniedrigen, sind analog zur MDI-Anwendung bisher üblicherweise zusätzlich alternative Treibmittel erforderlich. Diese Methode ist allerdings ebenfalls vor allem aus Gründen des Umweltschutzes nicht zu befürworten.

Überraschend wurde nun gefunden, daß atypisch hohe Wassermengen von mehr als 5,0 Gew.-Tln. pro 100 Gew.-Tle. "Basispolyol" problemlos verarbeitet und als Folge davon bei kalthärtendem Polyurethan-Weichformschaum Rohdichten von bis herab zu 15 kg/m³ erreicht werden können, wenn abweichend vom bislang als praxisüblich geltenden Kennzahlbereich (80-120) eine normalerweise prohibitiv niedrige Kennzahl von weniger als 70 zur Verschäumung gewählt wird.

Aus der GB-PS 892 776 ist zwar bereits bekannt geworden, harte oder halbharte Polymerschaumstoffe durch Umsetzung von 100 Gew.-Teilen eines monomeren organischen Polyisocyanats mit 1 bis 30 Gew.-Teilen Wasser in Gegenwart eines oberflächenaktiven Mittels und eines Katalysators, vorzugsweise in Gegenwart von 5 bis 30 Gew.-Teilen einer polyfunktionellen Verbindung mit zwei oder mehr als zwei isocyanatreaktiven Gruppen, herzustellen. Wie jedoch aus den Ansprüchen und auch aus den Beispielen dieser GB-PS zu entnehmen ist, handelt es sich bei den verwendeten "Katalysatoren" um anorganische Produkte des Kaliumacetat bzw. Natriumhydroxid, sodaß ein überweigend von Trimerisierungsreaktionen bestimmter Schäumungsablauf erzwungen wird und das Prinzip der erfindungsgemäß einzuhaltenden niedrigen Kennzahlen nicht zum Tragen kommt.

Die erfindungsgemäß herzustellenden PUR-Weichformschaumstoffe unterscheiden sich von den gemäß GB-PS 892 776 resultierenden harten und halbharten Schaumqualitäten insbesondere auch dadurch, daß sie eine andersartige Verformungscharakteristik aufweisen. Aus den z.B. bei Härtemessungen erhältlichen Verformungsdiagrammen läßt sich ableiten, daß die erfindungsgemäß hergestellten PUR-Weichformschaumstoffe eine höhere Elastizität (= schnelleres Rückstellvermögen nach Belastung) und ein geringeres Härteniveau besitzen. Beides ist im Hinblick auf die anwendungstypischen Anforderungen von Vorteil. Als charakteristischer Wert für dieses Eigenschaftsmerkmal gilt die relative Energieabsorption nach 70% Stauchung = H 70 (siehe hierzu Tabellen auf Seite 17 und 18).

Aus der GB-PS 1 133 691 ist ferner die Herstellung von flexiblen Polyurethan-Schaumstoffen durch Umsetzung von Polyisocyanaten vom Typ des Diphenylmethandiisocyanats mit höhermolekularen Polyolen in Gegenwart von 1,5-5,0 Teilen Wasser pro 100 Teile Polyol bekanntgeworden. Die Herstellung der Schaumstoffe erfolgt gemäß dieser GB-PS in offenen Formen. Es hat sich jedoch herausgestellt, daß der Einsatz von erhöhten Mengen an Wasser als Treibmittel bei derartigen freigeschäumten Polyurethan-Schaumstoffen zur Selbstentzündlichkeit des Schaumstoffs führen kann, wenn sie nach ihrer Herstellung gelagert werden. Außerdem treten oft Kernverfärbungen des Schaumstoffs auf. Dieser Befund ließ nicht erwarten, daß derartige Nachteile bei einer Verschäumung in geschlossenen Formen nicht auftreten, wenn – wie erfindungsgemäß – noch höhere Mengen an Wasser als Treibmittel eingesetzt werden.

Gegenstand der Erfindung ist ein Verfahren zur Herstellung von kalthärtenden Polyurethan-Weichformschaumstoffen durch Umsetzung von

a) Polyisocyanaten mit

b) Verbindungen mit mindestens zwei gegenüber Isocyanaten aktiven Wasserstoffatomen vom Molekulargewicht 400-10.000 und gegebenenfalls

c) Kettenverlängerungs- und Vernetzungsmitteln mit mindestens zwei gegenüber Isocyanaten aktiven Wasserstoffatomen vom Molekulargewicht 32-399 in Gegenwart von

d) Wasser als Treibmittel und gegebenenfalls in Gegenwart von

e) anderen Treibmitteln, Katalysatoren und weiteren an sich bekannten Hilfs- und Zusatzmitteln in einer geschlossenen Form, das dadurch gekennzeichnet ist, daß

1. als Polyisocyanate a) solche vom Typ des Diphenylmethan-diisocyanats und/oder des Toluylendiisocyanats und/oder Hexamethylendiisocyanats und/oder Isophorondiisocyanats, und

2. Wasser als Treibmittel d) in einer Menge von 5 bis 15 Gew.-Teilen, vorzugsweise 6-12 Gew.-Teilen, bezogen auf 100 Gew.-Teile der Komponente b) verwendet werden, wobei

3. die Umsetzung aller Komponten bei einer Kennzahl von unter 70, vorzugsweise 40-60, durchgeführt wird.

Zur Herstellung der Polyurethan-Weichformschaumstoffe werden erfindungsgemäß als Ausgangskomponenten verwendet :

1. Polyisocyanate vom Typ des Diphenylmethandiisocyanats und/oder des Toluylendiisocyanats, z.B. das 2,4- und 2,6-Toluylendiisocyanat, sowie beliebige Gemische dieser Isomeren ("TDI") ; 4,4'- und/oder 2,4'-Diphenylmethandiisocyanat (MDI), Hexamethylendiisocyanat und/oder Isophorondiisocyanat, Polyphenylpolymethylen-polyisocyanate, wie sie durch Anilin-Formaldehyd-Kondensation und anschließende Phosgenierung hergestellt werden ("rohes MDI"), ferner durch Carbodiimidgruppen, Urethangruppen, Allophanatgruppen, Isocyanuratgruppen, Harnstoffgruppen oder Biuretgruppen modifizierte Polyisocyanate, die sich vom 2,4- und/oder 2,6-Toluylendiisocyanat bzw. vom 4,4'- und/oder 2,4'Dipenylmethandiisocyanat und/oder Hexamethylendiisocyanat und/oder Isophorondiisocyanat ableiten, ferner alkylsubstituierte MDI-Typen, wie sie bei-spielsweise in DE-OS 2 935 318, DE-OS 3 032 128 und DE-OS 3 032 358 beschrieben werden.

Als erfindungsgemäß einzusetzende Polyisocyanate kommen vorzugsweise folgende MDI-Typen in Betracht :

a) Diphenylmethandiisocyanate im Gemisch mit Polyphenyl-polymethylen-polyisocyanaten, wobei der Anteil des Polyphenylpolymethylen-polyisocyanates 0-40 Gew.-% und der Gehalt an Diphenylmethandiisocyanat-Isomeren 100-60 Gew.-% betragen kann.

b) Urethanmodifizierte aromatische Di-/Poly-isocyanate mit einem NCO-Gehalt von 15-30 Gew.-%, welche erhalten werden durch Umsetzung einer wie unter a) beschriebenen Mischung aus Diphenylmethandiisocyanaten und Polyphenyl-polymethylen-polyisocyanaten mit einer Hydroxylverbindung, gegebenenfalls auch mehreren Hydroxylverbindungen, deren Funktionalität 2 bis 6 beträgt.

c) Gemische der unter a) und/oder b) bezeichneten MDI-Produkte mit maximal 25 Gew.-% aliphatischen, cycloaliphatischen, heterocyclischen oder weiteren andersartigen aromatischen Polyisocyanaten, wie sie z.B. von W. Siefken in Justus Liebigs Annalen der Chemie, 562, Seiten 75 bis 136, beschrieben werden.

Ferner kommen vorzugsweise folgende TDI-Typen erfindungsgemäß in Betracht :

– Toluylendiisocyanat als Gemisch der 2,4- und 2,6-Isomeren im Verhältnis 80 : 20 (T 80)

– Toluylendiisocyanat als Gemisch der 2,4- und 2,6-Isomeren im Verhältnis 65 : 35 (T 65)

– Toluylendiisocyanat-Prepolymere

– Abmischungen von TDI mit Diphenylmethandiisocyanat und/oder Polyphenylpolymethylen-polyisocyanaten.

2. Verbindungen mit mindestens zwei gegenüber Isocyanaten reaktionsfähigen Wasserstoffatomen von einem Molekulargewicht in der Regel von 400-10.000. Hierunter versteht man neben Aminogruppen, Thiolgruppen oder Carboxylgruppen aufweisenden Verbindungen vorzugsweise Hydroxylgruppen aufweisende Verbindungen, insbesondere zwei bis acht Hydroxylgruppen aufweisende Verbindungen, speziell solche vom Molekulargewicht 1.000 bis 6.000, vorzugsweise 2.000 bis 6.000, z.B. mindestens zwei, in der Regel zwei bis acht, vorzugsweise aber 2 bis 6, Hydroxylgruppen aufweisende Polyether, Polyester, Polycarbonate und Polyesteramide, wie sie für die Herstellung von homogenen und von zellförmigen Polyurethanen an sich bekannt sind und wie sie z.B. in der DE-OS 2 832 253, Seiten 11-18, beschrieben werden. Vorzugsweise weisen sie eine OH-Zahl von 28 bis 56 auf.

3. Gegebenenfalls Verbindungen mit mindestens zwei gegenüber Isocyanaten reaktionsfähigen Wasserstoffatomen und einem Molekulargewicht von 32 bis 399. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 2 832 253, Seiten 10-20, beschrieben.

4. Wasser als Treibmittel in einer Menge von 5 bis 15 Gew.-Teilen, vorzugsweise 6-12 Gew.-Teilen, pro 100 Gew.-Teile "Basispolyol" b)

5. Gegebenenfalls Hilfs- und Zusatzmittel wie

a) leicht flüchtige organische Substanzen als weitere Treibmittel,

b) Reaktionsbeschleuniger und Reaktionsverzögerer der an sich bekannten Art in der an sich üblichen Mengen,

c) oberflächenaktive Zusatzstoffe, wie Emulgatoren und Schaumstabilisatoren,

ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Trischlorethylphosphat, Trikresylphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Diese gegebenenfalls mitzuverwendenden Hilfs- und Zusatzstoffe werden beispielsweise in der DE-OS 2 732 292, Seiten 21-24, beschrieben.

Weitere Beispiele von gegebenenfalls erfindungsgemäßen mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103-113 beschrieben.

Durchführung des erfindungsgemäßen Verfahrens :

Die Reaktionskomponenten werden erfindungsgemäß nach dem an sich bekannten Einstufenverfahren, dem Präpolymerverfahren oder dem Semipräpolymerverfahren zu Umsetzung gebracht, wobei man sich oft maschineller Einrichtungen bedient, z.B. solcher, die in der US-Patentschrift 2 764 565 beschrieben werden. Einzelheiten über Verarbeitungseinrichtungen, die auch erfindungsgemäß infrage kommen, werden im Kunststoff-Handbuch, Band VII, herausgegeben von Vieweg und Höchtlen, Carl-Hanser-Verlag, München 1966, z.B. auf den Seiten 121-205, beschrieben.

Die Umsetzung aller Komponenten erfolgt erfindungsgemäß bei einer Kennzahl unter 70, vorzugsweise bei einer Kennzahl von 40-60.

Die Kennzahl, ein bei der Herstellung von Polyurethanschaumstoffen sehr häufig verwendeter Begriff, sagt etwas über den Vernetzungsgrad eines Schaumstoffs aus. Es ist Gepflogenheit, denjenigen Schaumstoff als mit der Kennzahl 100 gefertigt zu betrachten, bei welchem die den stöchiometrischen Verhältnissen entsprechende, bzw. die theoretisch notwendige Menge an Isocyanat benutzt wurde. Mit Hilfe der Kennzahl ist es also möglich, den Grad der Unter-oder Übervernetzung näher zu definieren. Die Kennzahl errechnet sich nach der allgemeinen Formel wie folgt :

$$\text{Kennzahl} = \frac{\text{Isocyanatmenge (praktisch)} \times 100}{\text{Isocyanatmenge (theoretisch)}}.$$

Erfindungsgemäß wird die Verschäumung in geschlossenen Formen durchgeführt. Dabei wird das Reaktionsgemisch in eine Form eingetragen. Als Formmaterial kommt Metall, z.B. Aluminium oder Kunststoff, z.B. Epoxidharz, infrage. In der Form schäumt das schäumfähige Reaktionsgemisch auf und bildet den Formkörper. Erfindungsgemäß kann man in diesem Zusammenhang so vorgehen, daß man in die Form so viel schaumfähiges Reaktionsgemisch einträgt, daß der gebildete Schaumstoff die Form gerade ausfüllt. Man kann aber auch so arbeiten, daß man mehr schaumfähiges Reaktionsgemisch in die Form einträgt, als zur Auffüllung des Formüneren mit Schaumstoff notwendig ist. Im letztgenannten Fall wird somit unter "over-charging" gearbeitet ; eine derartige Verfahrensweise ist z.B. aus den US-Patentschriften 3 178 490 und 3 182 104 bekannt.

Die erfindungsgemäß erhältlichen Polyurethan-Weichformschaumstoffe finden z.B. Anwendung als Armaturentafeln, Armlehnen (auch PKW-Lehnen), Liege- und Sitzmöbel, Kopfstützen, Sitze in Verkehrsmitteln, vorzugsweise im Auto.

## Beispiele

Die Herstellung der erfindungsgemäßen Weichformschaumstoffe erfolgt durch intensives Vermischen der nachgenannten Rezepturbestandteile und Einbringung dieses reaktionsfähigen Gemisches in eine allseitig verschließbare Form. Bei diesem Verfahren werden bis auf das Polyisocyanat alle Einzelkomponenten der jeweiligen Rohstoffkombination einer Vorvermischung unterworfen (= Komponente A), welche dann in einem Folgeschritt mit dem Polyisocyanat (Komponente B) zur Umsetzung gelangt. Die Mengenangaben in den Tabellen sind Gew.-Teile.

| | |
|---|---|
| Polyether A : | trifunktioneller langkettiger PO/EO-Polyether (ca. 21% EO/OHZ = 28) |
| Polyether B : | bifunktioneller langkettiger PO/EO-Polyether (ca. 30% EO/OHZ = 28) |
| Polyether C : | hexafunktioneller langkettiger PO/EO-Polyether (ca. 18% EO/OHZ = 28) |
| Polyether D : | trifunktioneller kurzkettiger EO-Polyether (100% EO/OHZ = 550) |
| Polyether E : | trifunktioneller langkettiger PO/EO-Polyether (ca. 13% EO/OHZ = 28) |
| Polyether F : | trifunktioneller langkettiger PO/EO-Polyether (ca. 18% EO/OHZ = 35) mit ca. 20% organischem Füllstoff |
| Polyether G : | trifunktioneller langkettiger PO/EO-Polyether (ca. 5% EO/OHZ = 56) |
| Polyether H : | trifunktioneller langkettiger PO/EO-Polyether (ca. 73% EO/OHZ = 36) |
| Polyether I : | hexafunktioneller langkettiger PO/EO-Polyether (ca. 82% EO/OHZ = 100) |
| Katalysator 1 : | Triethylendiamin / 33%ig in Dipropylenglykol |
| Katalysator 2 : | N,N-Bis-(3-Dimethylamino-n-propyl)formamid |
| Katalysator 3 : | N,N-Bis-(3-Dimethylamino-n-propyl)methylamin |
| Katalysator 4 : | Dibutylzinndilaurat |
| Katalysator 5 : | Dimethylaminopropylamin |
| Stabilisator KS 43 : | Handelsprodukt der Bayer AG |
| Tegostab® B 4690 : | Handelsprodukt der TH. Goldschmidt AG |
| Tegostab® B 4900 : | Handelsprodukt der TH. Goldschmidt AG |
| Tegostab® B 8002 : | Handelsprodukt der TH. Goldschmidt AG |
| Isocyanat S : | Abmischung aus 80% TDI 80 und 20% MDI roh |
| Isocyanat T : | Abmischung aus 80% TDI 65 und 20% MDI roh |
| Isocyanat U : | Abmischung aus 70% TDI 65 und 30% MDI roh |
| Isocyanat V : | Prepolymer auf Basis TDI 65 und Polyether C (52 : 10/NCO = 40,5%) |
| Isocyanat W : | Prepolymer auf Basis TDI 80 und Polyether C (52 : 10/NCO = 40,5%) |
| Isocyanat X : | Prepolymer auf Basis MDI 85/20 und Polyether B (60 : 40/NCO = 18,5%), welches abgemischt wird mit MDI 82/34 (38 : 62/NCO = 27,1%) |
| Isocyanat Y : | Prepolymer auf Basis MDI 84/24 und Polyether E (80 : 20/NCO = 25,4%) |
| Isocyanat Z : | Abmischung aus MDI 82/34 und TDI 80 (80 : 20/NCO = 35,5%) |

| Beispiele | 1 | 2 | 3 | 4 | 5 | 6 | 7 | 8 | 9 | 10 | 11 | 12 | 13 |
|---|---|---|---|---|---|---|---|---|---|---|---|---|---|
| Polyether E | 100 | 100 | 100 | 100 | 97 | 100 | 25 | - | - | - | - | - | - |
| Polyether F | - | - | - | - | - | - | 75 | - | - | - | 10 | - | - |
| Polyether A | - | - | - | - | - | - | - | 95 | - | - | - | - | - |
| Polyether B | - | - | - | - | - | - | - | - | 70 | - | - | - | - |
| Polyether C | - | - | - | - | - | - | - | - | - | 85,5 | 75 | 85 | 100 |
| Polyether D | - | - | - | - | 2,0 | - | - | - | - | - | - | - | - |
| Polyether G | - | - | - | - | - | - | - | - | 30 | 9,5 | - | - | - |
| Polyether H | - | 2,0 | - | - | - | 2,0 | - | - | - | 5,0 | 15 | 15 | - |
| Wasser | 10 | 10 | 10 | 10 | 10 | 7,5 | 10 | 10 | 10 | 10 | 10 | 10 | 10 |
| Katalysator 1 | 0,2 | 0,2 | 0,2 | - | 0,5 | 0,2 | - | 0,5 | - | 0,7 | 0,5 | 0,7 | 0,3 |
| Katalysator 2 | 0,5 | - | 0,2 | - | - | 0,2 | - | - | - | - | - | - | - |
| Katalysator 3 | 0,5 | - | - | 0,5 | - | - | 0,5 | - | 0,5 | 0,3 | 0,1 | 0,3 | - |
| Triethylamin | - | - | - | 1,0 | 0,5 | - | 1,0 | 0,5 | 1,0 | 1,0 | 1,0 | 1,0 | 0,5 |
| Diethanolamin | 1,0 | 1,0 | 2,0 | - | - | 1,5 | - | - | - | - | - | - | - |
| Polyether I | - | - | - | 3,0 | 1,0 | - | 3,0 | 5,0 | - | - | - | - | - |
| Katalysator 4 | 0,2 | 0,1 | 0,1 | - | - | 0,1 | - | - | - | - | - | - | - |
| Stabilisator KS 43 | 1,0 | 1,0 | 1,0 | - | - | 1,0 | - | - | - | 1,0 | - | 1,0 | 0,5 |
| Tegostab B 8002 | - | - | - | - | - | - | - | - | 0,6 | - | 0,1 | - | - |
| E-Caprolactam | - | - | 10 | - | - | 7,5 | - | - | - | - | - | - | - |
| | | | | | | | | | | | | | |
| MDI 100/52 *) | + | | | | | | | | | | | | |
| MDI 81/22 | | + | | | | | | | | | | | |
| MDI 84/24 | | | + | | | + | | | | | | | |
| MDI 82/34 | | | | + | | | + | | | | | | |
| MDI 85/27 | | | | | + | | | | | | | | |
| Isocyanat X | | | | | | | | + | | | | | |
| Isocyanat Y | | | | | | | | | + | | | | |
| MDI 88/28 | | | | | | | | | | + | + | | + |
| Isocyanat Z | | | | | | | | | | | | + | |

EP 0 296 449 B1

| Beispiele | 1 | 2 | 3 | 4 | 5 | 6 | 7 | 8 | 9 | 10 | 11 | 12 | 13 |
|---|---|---|---|---|---|---|---|---|---|---|---|---|---|
| MDI 100/52 *) | + | | | | | | | | | | | | |
| MDI 81/22 | | + | | | | | | | | | | | |
| MDI 84/24 | | | + | | | + | | | | | | | |
| MDI 82/34 | | | | + | | | + | | | | | | |
| MDI 85/27 | | | | | + | | | | | | | | |
| Isocyanat X | | | | | | | | + | | | | | |
| Isocyanat Y | | | | | | | | | + | | | | |
| MDI 88/28 | | | | | | | | | | + | + | | + |
| Isocyanat Z | | | | | | | | | | | | + | |
| | | | | | | | | | | | | | |
| Kennzahl | 50 | 50 | 50 | 60 | 44 | 50 | 40 | 36 | 50 | 50 | 50 | 50 | 42 |
| Rohdichte (kg/m$^3$) | 27/28 | 26/26 | 26/26 | 25/25 | 34/34 | 29/29 | 30/29 | 32/33 | 32/32 | 32/32 | 31/31 | 30/30 | 28/29 |
| H 70 (%) | 44,5 | 39,6 | 39,8 | 41,8 | 41,9 | 31,2 | 44,7 | 38,6 | 43,0 | 36,8 | 32,6 | 29,0 | 41,7 |

*) Bei dieser für MDI-Produkte typischen Beschreibung entspricht die erste Ziffer dem 2 Kern-Gehalt und die zweite Zahl dem Anteil des 2,4-Isomeren.

EP 0 296 449 B1

| Beispiele | 14 | 15 | 16 | 17 | 18 | 19 | 20 | 21 | 22 | 23 | 24 | 25 | 26 | 27 |
|---|---|---|---|---|---|---|---|---|---|---|---|---|---|---|
| Polyether A | - | - | 10 | - | - | 30 | - | - | - | - | - | - | - | - |
| Polyether C | 90 | 98 | 40 | 70 | 90 | 70 | 90 | 70 | 98 | 98 | 98 | 90 | 90 | 80 |
| Polyether F | 10 | - | 48 | 28 | 10 | - | 10 | 30 | - | - | - | - | - | 18 |
| Polyether H | - | 2 | 2 | 2 | - | - | - | - | 2 | 2 | 2 | - | - | 2 |
| Wasser | 10 | 10 | 10 | 10 | 10 | 10 | 10 | 10 | 10 | 10 | 10 | 10 | 10 | 10 |
| Katalysator 1 | 0,5 | 0,66 | 0,5 | 0,5 | 0,5 | 0,5 | 0,5 | 0,5 | 0,5 | 0,5 | 0,5 | 0,5 | 0,5 | 0,5 |
| Katalysator 3 | 0,1 | 0,1 | 0,1 | 0,1 | 0,1 | 0,1 | 0,1 | 0,1 | 0,1 | 0,1 | 0,1 | 0,1 | 0,1 | 0,1 |
| Katalysator 5 | - | 0,35 | - | - | - | - | - | - | - | - | - | - | - | - |
| Diethanolamin | - | - | - | - | - | - | - | 1,5 | - | - | - | - | - | - |
| Triethanolamin | 0,5 | 0,25 | 0,5 | 0,5 | 0,5 | 0,5 | 0,5 | 0,5 | 0,5 | 0,5 | 0,5 | 0,5 | 0,5 | 0,5 |
| Stabilisator KS 43 | 1,0 | - | - | - | - | - | - | - | 0,5 | 0,5 | 0,5 | 0,5 | 1,0 | - |
| Tegostab B 4690 | - | 2,0 | 2,0 | 2,0 | 2,0 | 2,0 | 2,0 | 2,0 | - | - | - | - | - | - |
| Tegostab B 4900 | 0,1 | - | - | - | - | - | - | - | - | - | - | - | - | - |
| Tegostab B 8002 | - | - | - | - | - | - | - | - | 0,1 | 0,1 | 0,1 | 0,2 | 0,2 | 0,1 |
| TDI 65 | + | - | - | - | - | - | - | - | - | - | - | - | - | - |
| TDI 80 | - | + | + | + | + | + | + | + | - | - | - | - | - | - |
| Isocyanat S | - | - | - | - | - | - | - | - | + | - | - | - | - | - |
| Isocyanat T | - | - | - | - | - | - | - | - | - | + | - | - | - | - |
| Isocyanat U | - | - | - | - | - | - | - | - | - | - | + | - | - | - |
| Isocyanat V | - | - | - | - | - | - | - | - | - | - | - | + | + | - |
| Isocyanat W | - | - | - | - | - | - | - | - | - | - | - | - | - | + |
| Kennzahl | 50 | 50 | 50 | 50 | 50 | 50 | 50 | 50 | 50 | 50 | 50 | 50 | 50 | 50 |
| Rohdichte (kg/m$^3$) | 24 | 24 | 24 | 22 | 22 | 23 | 23 | 22 | 24 | 24 | 24 | 24 | 21 | 23 |
| H 70 (%) | 25,0 | 24,2 | 21,2 | 21,7 | 23,4 | 22,9 | 24,1 | 24,5 | - | - | - | - | - | - |

EP 0 296 449 B1

EP 0 296 449 B1

Die vorzeitig tabellarisch aufgeführten Rohstoffkombinationen ergeben bei erfindungsgemäßer Umsetzung Schaumqualitäten, deren Eigenschaftsniveau sich wie folgt beschreiben läßt :

|  | MDI-Basis | TDI-Basis |
|---|---|---|
| Rohdichte [kg/m$^3$] | 25-35 | 20-25 |
| Stauchhärte 40 % [kPa] | 2- 4 | 1- 2 |
| Zugfestigkeit [KPa] | 80-120 | 70-100 |
| Bruchdehnung [%] | 80-115 | 80-110 |
| Druckverformungsrest 50 % [%] | 10-40 | 4- 7 |

## Ansprüche

1. Verfahren zur Herstellung von kalthärtenden Polyurethan-Weichformschaumstoffen durch Umsetzung von
a) Polyisocyanaten mit
b) Verbindungen mit mindestens zwei gegenüber Isocyanaten aktiven Wasserstoffatomen vom Molekulargewicht 400 bis 10.000 und gegebenenfalls
c) Kettenverlängerungs- und Vernetzungsmitteln mit mindestens zwei gegenüber Isocyanaten aktiven Wasserstoffatomen vom Molekulargewicht 32-399 in Gegenwart von
d) Wasser als Treibmittel und gegebenenfalls in Gegenwart von
e) anderen Treibmitteln, Katalysatoren und weiteren an sich bekannten Hilfs- und Zusatzmitteln
in einer geschlossenen Form, dadurch gekennzeichnet, daß
(1) als Polyisocyanate a) solche vom Typ des Diphenylmethan-diisocyanats und/oder des Toluylendiisocyanats und/oder Hexamethylendiisocyanats und/oder Isophorondiisocyanats, und
(2) Wasser als Treibmittel d) in einer Menge von 5 bis 15 Gew.-Teilen, vorzugsweise 6-12 Gew.-Teilen, bezogen auf 100 Gew.-Teile der Komponente b) verwendet werden, wobei
(3) die Umsetzung aller Komponenten bei einer Kennzahl von unter 70, vorzugsweise 40-60, durchgeführt wird.

## Claims

1. A process for the production of cold-cure flexible moulded polyurethane foams by reaction of
a) polyisocyanates with
b) compounds containing at least two isocyanate-reactive hydrogen atoms and having a molecular weight of 400 to 10,000 and optionally
c) chain-extending and crosslinking agents containing at least two isocyanate-reactive hydrogen atoms and having a molecular weight of 32 to 399 in the presence of
d) water as blowing agent and optionally in the presence of
e) other blowing agents, catalysts and other auxiliaries and additives known per se
in a closed mould, characterized in that
(1) the polyisocyanates a) used are of the diphenyl methane diisocyanate and/or tolylene diisocyanate and/or hexamethylene diisocyanate and/or isophorone diisocyanate type and
(2) water is used as blowing agent in a quantity of 5 to 15 parts by weight and preferably in a quantity of 6 to 12 parts by weight, based on 100 parts by weight of component b),
(3) the reaction of all the components being carried out at an index below 70 and preferably in the range from 40 to 60.

9

## Revendications

1. Procédé de production de mousses souples moulables en polyuréthanne durcissant à froid, par réaction
a) de polyisocyanates avec
b) des composés portant au moins deux atomes d'hydrogène actif vis-à-vis d'isocyanates, d'un poids moléculaire de 400 à 10 000 et, le cas échéant
c) des agents d'allongement de chaîne et des agents de réticulation portant au moins deux atomes d'hydrogène actif vis-à-vis d'isocyanates, d'un poids moléculaire de 32 à 399 en présence
d) d'eau comme agent porogène et, le cas échéant, en présence
e) d'autres agents porogènes, de catalyseurs et d'autres adjuvants et additifs connus
dans un moule fermé, procédé caractérisé en ce qu'on utilise
(1) comme polyisocyanates a), des polyisocyanates du type du diisocyanatodiphénylméthane et/ou du diisocyanatotoluène et/ou de l'hexaméthylènediisocyanate et/ou de l'isophoronediisocyanate, et
(2) de l'eau comme agent porogène d) en une quantité de 5 à 15 parties en poids, de préférence de 6 à 12 parties en poids, pour 100 parties en poids du composant b),
(3) en conduisant la réaction de tous les composants pour une caractéristique inférieure à 70, de préférence comprise entre 40 et 60.